# EUROPEAN PATENT SPECIFICATION

(11) **EP 4 439 203 B1**
(45) Date of publication and mention of the grant of the patent: **04.11.2026**
(21) Application number: 23166158.8
(22) Date of filing: 31.03.2023
(51) Int. Cl.: G05B 15/02

(54) **METHOD AND SYSTEM FOR MONITORING AND/OR CONTROLLING DEVICES OF A SMART BUILDING**
VERFAHREN UND SYSTEM ZUR ÜBERWACHUNG UND/ODER STEUERUNG VON VORRICHTUNGEN EINES INTELLIGENTEN GEBÄUDES
PROCÉDÉ ET SYSTÈME DE SURVEILLANCE ET/OU DE COMMANDE DE DISPOSITIFS D'UN BÂTIMENT INTELLIGENT

(43) Date of publication of application: 02.10.2024
(73) Proprietor: ABB Schweiz AG, 5400 Baden (CH)
(72) Inventor: COPPIK, Nicolas, 64293 Darmstadt (DE); BERNING, Matthias, 67549 Worms (DE)
(74) Representative: Zimmermann & Partner Patentanwälte mbB

(56) References cited:
- CN-A- 108 710 306
- CN-A- 109 283 893
- US-A1- 2012 166 642
- US-A1- 2017 357 425
- US-A1- 2020 396 208
- US-A9- 2019 049 811

## Description

### FIELD

The present disclosure relates to methods and systems for monitoring and/or controlling devices of a smart building.

### BACKGROUND

A smart building includes a plurality of devices that are configured to collect data or to implement specific functions and that are typically monitored and/or controlled via applications executed on an operating system of the smart building. Further remote control may be possible, when for example the application on the operating system of the smart building communicates with further devices like smartphones, etc.

The devices may collect data like for example data related to the occupation of rooms in the smart building, the characteristic of the air in the rooms of the smart building, like for example the temperature or the humidity of the air in the rooms of the smart building or the intensity of the light in the rooms and/or the devices may implement for example heating, ventilation, air conditioning functions in the smart building and/or provide illumination and/or move a shutter of windows in the smart building.

Therefore, the devices may be sensors and/or actuators and may be monitored and controlled via applications executed on an operating system of the smart building that read and process data collected by the devices and execute instructions that cause the devices to implement the intended functionalities, optionally with further communications with external devices and/or smartphones. The operating system of the smart building may execute applications in order to monitor and control a plurality of the devices of the smart building and allows to intelligently and optimally control the building, for example implementing a control of the heating and air conditioning devices in function of automatically detected occupancy of rooms to optimize the energy consumption.

The data collected by the devices in the smart building that is further collected and processed by the applications executed by the building operating system and that allows the intelligent control of the devices in the smart building via said applications is often sensitive data related for example to the occupancy of the rooms in the smart building. The applications executed on the smart building operating system may also be third party applications, for example applications of specific tenants, to allow a more flexible implementation of specific functionalities.

Therefore, it is beneficial to prevent that said sensitive data may be read by third-parties that should not be allowed to read and/or access the sensitive data. For example, a specific tenant in the building should not have access to data related to rooms of another tenant in the smart building.

It is also beneficial to prevent an unauthorized access to devices, for example preventing that a tenant accesses and/or controls devices of another tenant in the smart building.

Known access control mechanisms typically relate particular resources in the smart building, like specific/individual devices, to particular parties, e.g. particular tenants, for example preventing that an application of a particular party/tenant accesses a particular device of another party/tenant.

Said known access control mechanism require complex permission assignments, typically specified and updated manually, in a centralized configuration and are error prone, for example inadvertently and erroneously allowing access to data of devices after a change in the allocations of rooms, if the permissions are not timely and correctly manually updated. Therefore, known access control mechanisms require a manual and timely update of the permissions related to individual devices whenever the state of the building and/or the allocation of the rooms changes, resulting in an unreliable and time-consuming access control.

It would be therefore beneficial to improve an access control of the smart building.

Relevant prior art is provided by US 2020/396208 A1 (BRETT DALE [AU] ET AL) 17 December 2020 (2020-12-17), and US 2017/357425 A1 (SMITH BENJAMIN A [US] ET AL) 14 December 2017 (2017-12-14).

### SUMMARY

The invention is defined by the independent claims. The dependent claims define further embodiments of the invention.

One aspect of the present disclosure relates to a method for monitoring and/or controlling devices of a smart building, the method comprising:
- generating a plurality of device groups, wherein each device group includes one or more devices of the smart building and is defined to include all devices of the smart building that satisfy one or more properties;
- providing one or more device group access constraints for a monitoring and/or controlling application,
   wherein the monitoring and/or controlling application is configured for monitoring and/or controlling at least one device of the smart building,
   wherein each device group access constraint is associated with a device group of the plurality of device groups and specifies a grant or refusal of permission for the monitoring and/or controlling application to access said device group;

   --receiving, from the monitoring and/or controlling application, a request to access a first device group of the plurality of device groups;
- granting or refusing, by a permission control unit of the smart building, the monitoring and/or controlling application permission to access the first device group based on one or more device group access constraints associated with the first device group; and
- if said access to the first device group is granted, monitoring and/or controlling at least one device of the first device group via an execution of the monitoring and/or controlling application.

Another aspect of the present disclosure relates to a system for monitoring and/or controlling devices of a smart building, the system being configured to:
- generate a plurality of device groups, wherein each device group includes one or more devices of the smart building and is defined to include all devices of the smart building that satisfy one or more properties;
- store, in a storing unit of the system, one or more device group access constraints for a monitoring and/or controlling application,
   wherein the monitoring and/or controlling application is configured for monitoring and/or controlling at least one device of the smart building,
   wherein each device group access constraint is associated with a device group of the plurality of device groups and specifies a grant or refusal of permission for the monitoring and/or controlling application to access said device group;
- receive, from the monitoring and/or controlling application, a request to access a first device group of the plurality of device groups;
- grant or refuse, by a permission control unit of the system, the monitoring and/or controlling application permission to access the first device group based on one or more device group access constraints associated with the first device group; and
- if said access to the first device group is granted, monitor and/or control at least one device of the first device group via an execution of the monitoring and/or controlling application.

### BRIEF DESCRIPTION OF THE DRAWINGS

Some embodiments will be described in more detail in the following description of exemplary embodiments with reference to the following drawings:
FIG. 1A shows an example of a floor of a smart building according to the present disclosure.
FIG. 1B shows examples of access constraints based on permission for each resource.
FIG. 2A shows an example of a floor of a smart building according to the present disclosure after a reallocation of rooms.
FIG. 2B shows examples of access constraints based on device group access constraints according to the present disclosure.
FIG. 3A shows an example of a floor of a smart building according to the present disclosure after a reconfiguration of devices.
FIG. 3B shows examples of access constraints based on device group access constraints according to the present disclosure.
FIG 4 shows a method for monitoring and/or controlling devices of a smart building according to the present disclosure.
FIG. 5 shows a system for monitoring and/or controlling devices of a smart building according to the present disclosure.

### DETAILED DESCRIPTION

Detailed description of some embodiments is provided. Each exemplary embodiment is provided by way of explanation of the disclosure and is not meant as a limitation of the disclosure.

A smart building integrates and automates the different devices and systems of the building, for example integrating and automating electrical and mechanical devices in the building using a building operating system to increase for example energy efficiency of the whole building and the comfort of the tenants in the whole building. Typically, devices of the smart building are connected to a network and monitored and controlled by a monitoring and controlling application for example executed on a building operating system of the smart building. Devices may be sensors or actuators. In a smart building, the control and monitoring of devices can be therefore for example holistically based on the state of the whole building and can for example take into account correlations and interrelations that are otherwise neglected for example when controlling devices individually and/or when merely monitoring and controlling devices in some rooms, for example merely in rooms e.g. of a specific tenant.

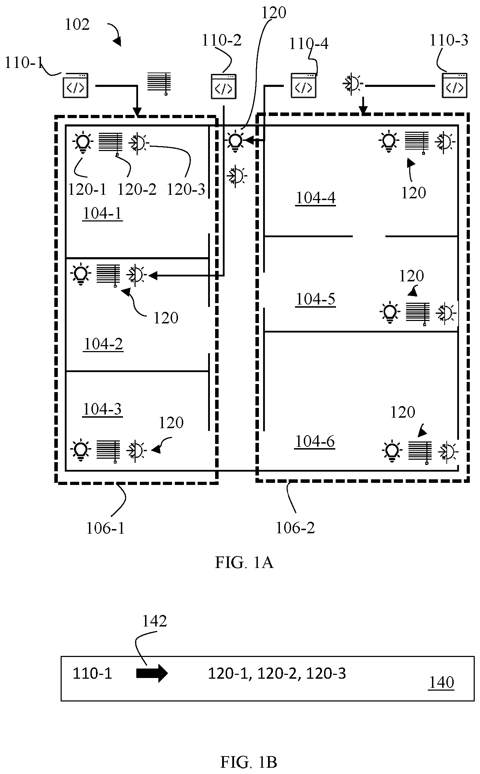

FIG. 1A shows an example of a floor 102 of a smart building according to the present disclosure. A smart building may include one or more floors as for example the floor 102 and each floor may include rooms of one or more tenants 106 of the smart building. For example, the exemplarily shown floor 102 includes six rooms 104-1, 104-2, 104-3, 104-4, 104-5, 104-6 of two tenants 106-1 and 106-2. In the example shown in FIG. 1A, the rooms 104-1, 104-2, 104-3 are rooms of tenant 106-1, while the rooms 104-4, 104-5, 104-6 are rooms of tenant 106-2. A smart building according to the present disclosure may have any number of floors, any number of rooms and any number of tenants in the various floors. Furthermore, common areas, like for example staircases, halls, corridors may be present. A floor may also be formed by common areas in addition to rooms of tenants or may exclusively by formed by common areas, and may also be exclusively a common area, like a big hall.

In one or more rooms of one or more tenants in one or more floors, one or more devices 120 may be present. For example, in the rooms 104-1, 104-2, 104-3, 104-4, 104-5, 104-6 of the tenants 106-1, 106-2, any combination of one or more lights 120-1 and of one or more shutters 120-2 and/or one or more air conditioning systems 120-3 may be present among the devices 120. Alternatively, or in addition, any combination of heaters and/or heat pumps may also be present among the devices 120. The devices 120 may further include any suitable type of sensor for detecting if a room is in use and/or to measure one or more characteristics of the room, like for example the temperature and/or the humidity of the room and/or the light conditions in the room, etc.

One or more applications 110 may be configured to monitor and/or control the devices 120, for example to control lights 120-1, shutters 120-2 and/or air conditioning systems 120-3 and/or heaters and/or heat pumps among the devices 120. The monitoring and/or controlling may in particular be based on data obtained by sensors included among the devices 120, like for example sensors configured to detect the use of the room and/or to measure the temperature, humidity and/or light condition in the room.

The described devices 120 are only examples and may alternatively or in addition include any different type of device, in particular any sensor or actuator suitable to respectively detect and control the state of a room 104 of the smart building. Alternative or additional devices and applications may be related for example to heating of water and/or to the activation of infotainment systems and/or to the control of smart devices and/or Internet-of-Things devices in rooms of tenants of the smart building.

Some of the devices 120 may be located in common areas, like for example common staircases and common floors, such that devices 120 do not have to be necessarily associated with specific tenants 106.

One or more sensors among the devices 120 may in particular be configured to detect a usage of a room 104, for example sensors to detect the presence of persons in the room. Said sensors may for example be infrared sensors and/or any suitable sensor to detect the presence of a human or an animal in the room.

The applications 110 may be a third-party application, like for example an application of a tenant, or may be provided together with the software of the smart building. The applications 110 are typically executed on an operating system of the smart building and include instructions that when executed change or read states of the devices 120 in the smart building, like for example instructions that allow a reading of a temperature of a room 104 via temperature sensors among the devices 120 and/or instructions that activate an air conditioning device 120-3 or a heater in a particular room, for example based on the usage or the room as detected by sensors among the devices 120.

The applications 110 may be a monitoring and/or controlling application that is further configured to forward data to other systems, e.g. over a network and/or to a cloud computer system and/or to a storage, for example a storage of the cloud computer system

Different tenants may execute or request the execution of different applications. For example, tenant 106-1 may execute application 110-1 configured to monitor and control devices 120 in (only) the rooms 104-1, 104-2, 104-3 associated with tenant 106-1, for example to specifically control shutters 120-2 among the devices 120. Tenant 106-1 may for example, alternatively or in addition, execute an application 110-2 configured to control devices 120 in the particular room 104-2, for example to control lights and heat water or play music in a specific bathroom according to her or his personal preferences. Further interactions and/or remote control for example with a smartphone of the tenant may become possible via the applications executed on the smart building operating system.

An application 110 may include information about who is executing said application, i.e. if it is an application for example of a specific tenant like e.g. tenant 106-1.

Another tenant, like for example tenant 106-2 that is different from tenant 106-1, may run a different application 110-3 to monitor and control devices 120, for example the devices in (only) the rooms 104-4, 104-5, 104-6 associated with tenant 106-2 and for example specifically air conditioning systems 120-3 or heaters therein.

Yet another application 110-4 may for example be configured to control devices 120 in common spaces of the smart building, like common floors or staircases.

The operating system of the smart building may execute the applications 110, like for example the applications 110-1, 110-2 of tenant 106-1 and/or the application 110-3 of tenant 106-2 and/or the application 110-4 monitoring and controlling devices in common spaces of the smart building.

An application 110 may be an application available together with the operating system of the smart building or provided by one or more third-parties, like for example the tenants of the smart building, who may write and compile and/or configure specific applications according to their preferences.

It becomes apparent that the applications 110 may collect sensitive data and may have access to sensitive devices in the rooms of the tenants.

It is therefore beneficial to prevent unauthorized access to data and devices. It is for example beneficial to ensure that a tenant cannot access or read data collected by devices of another tenant or to control devices of another tenant. Similarly, in at least some situations, a tenant should not be permitted to access or read data collected by devices in common spaces and/or should not be permitted to control devices located in common spaces.

More generally, smart building applications may be configured to access information about a building to provide their intended functionality. The applications 110 may be configured to access information from one or more devices 120, in particular from one or more sensors that may be located anywhere in the building but not in areas where a reading access should not be granted, for example due to privacy reasons.

Therefore, granting applications unrestricted access, e.g. unrestricted access to any device 120, is undesirable, as data may be privacy-sensitive, e.g. sensor data form sensors among devices 120 located in private areas of tenants, or commercially valuable.

In smart buildings, building operating systems may offer a platform for smart building applications, including a unified, structured way for applications to access data from various sensors and devices in the building. Building operating systems may allow third-party applications, like for example applications 110, to access data and provide functionality that is otherwise limited to first-party applications. Smart building applications 110 may make use of both static aspects, e.g. floorplans, and dynamic aspects, e.g. temperature sensors, heating, ventilation, and air conditioning equipment of the building, i.e. they may access any data among the devices 120, in particular accessing sensors among the devices 120. Smart building applications may therefore operate on various kinds of building data, both static, e.g. floorplans, and dynamic, e.g. sensor data. Such data may be data needed to carry out a specific task, or an application might request more data than is strictly necessary, for example with redundant measurements and/or to implement additional functionalities on top of a core specification.

The access applications 110 have to building data, i.e. data of devices 120, must be managed and restricted as data may be privacy-sensitive or have commercial value, and a malicious, faulty, or compromised application may attempt to access data that is not required for its intended function, e.g. when a tenant 106-1 maliciously tries to access data of devices on another tenant 106-2.

Such restrictions can be achieved with different access control mechanisms, such as for example role-based access control (RBAC). In a smart building, applying RBAC would involve defining roles, e.g. owner, facility manager, tenant(s), and defining permissions for each resource, such as a device or a sensor among the devices, each role may access. A cumbersome configuration is required when considering RBAC given that a mapping between roles and devices must be typically manually created and updated.

Further, in a smart building with a building operating system, subjects and resources can be subject to frequent churn.

Resources may change when equipment or sensors are added, removed, or replaced among the devices 120. Subjects change when applications 110 are installed, removed, or reconfigured, and when, for example, tenants 106 or room 104 allocations in commercial buildings change. In such cases, and particularly when applying a role-based access control, the corresponding permission must be frequently updated to ensure that the reflect the actual state of the building. Otherwise, permissions may become stale, resulting in applications not functioning properly, e.g. when permissions for a newly added or replaced sensor to the devices 120 where not updated, or inadvertently accessing data that should not be available to them, e.g. when room allocations are changed and permissions are not updated to reflect the change. In particular for buildings with multiple tenants 106 and in the presence of shared infrastructure, the abovementioned problems become especially relevant and critical.

FIG. 1B shows examples of access constraints that are based on permission for each device individually. The application 110-1 has in the shown example the permission to access the devices 120-1, 120-2, 120-3 that are located in room 104-1 of tenant 106-1. The permissions are defined in terms of an explicit relation between the applications and the respective devices that the application is allowed to access. The explicit relation may explicitly identify the individual devices that the application is allowed to access, for example, by providing a list of the names of all the devices in question. According to the example in FIG. 1B, an individual device access constraint 140 may explicitly identify the devices 120-1, 120-2, 120-3 that the application 110-1 is allowed to access. An individual device access constraint can be understood as an access constraint associated with an individual device. Each application may have the permission to access a plurality of devices, specified for example as a list or set of individual devices.

For example, an individual device access constraint 140 may specify an individual device access constraint relation 142, symbolically indicated with an arrow in FIG. 1B, relating an application, like for example the application 110-1 of tenant 106-1, to devices, like for example, the devices 120-1, 120-2, 120-3.The individual device access constraint relation 142 specifies for example the type of access that the application is allowed or, alternatively, prohibited to have with respect to the devices in question. For example, the individual device access constraint relation may specify a permission to read and/or write and/or execute specific functions and may involve further restrictions like for example allowing a reading and/or writing and/or executing access only if the device is in a particular state, like for example turned on or off.

When the application 110-1 is executed, the smart building operation system ensures that application 110-1 only accesses devices in accordance with the individual device access constraints 140. The application 110 may be defined as including information about who is executing said application, for example which tenant runs the application on the operating system of the smart building. So, the same software code when executed by different tenants may result in different applications that may have different permissions according to different individual device access constraints 140. For example, different tenants may execute the same software code on the operating system of the smart building resulting in different applications executed by different tenants by the same underlying operating system of the smart building that may therefore be a multi-user operating system.

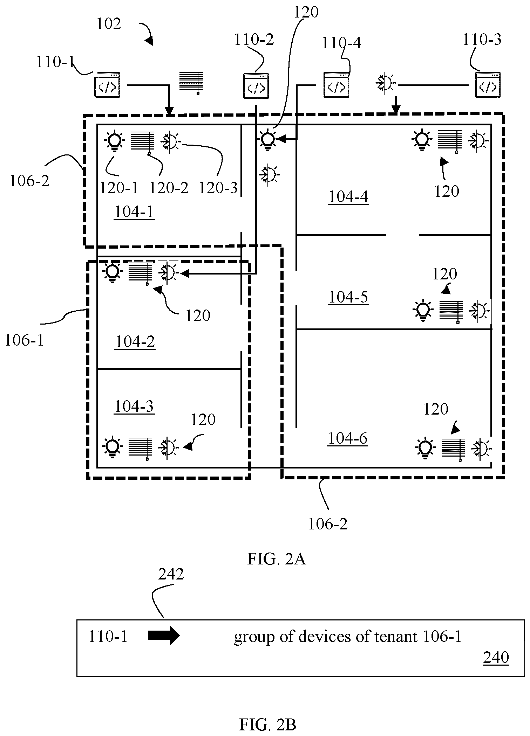

FIG. 2A shows an example of a floor of a smart building according to the present disclosure after a reallocation of rooms. The floor of FIG. 2A is the same floor as in FIG. 1A with the difference that room 104-1 is allocated to tenant 106-2 instead of tenant 106-1, after a reallocation of the rooms.

Without an update to the individual device access constraints 140, application 110-1 may still access the devices in room 104-1, thereby allowing tenant 106-1 to read and access data of the devices in room 104-1 thereby allowing tenant 106-1 an access to data and devices that are now of tenant 106-2 contrary to the privacy and security requirements.

According to the present disclosure, instead of the above-described individual device access constraints 140 that explicitly identify each individual device that an application is allowed to access, access constraints are specified in terms of groups of devices and are called device group access constraints, as exemplarily shown in FIG. 2B. In FIG. 2B exemplarily a very simple device group access constraint 240 is exemplarily illustrated that specifies that the application 110 is allowed to access any device that is associated with tenant 106-1, or in other words the group of devices defined by the property of being associated to tenant 106-1, without explicitly referring to the devices in question when defining the group. That is to say, a device group access constraint may identify a particular device group defined in terms of one or more properties, but it may be the case that the information as to which devices are included in the device group in question is not part of the formulation of the device group access constraint. The device group containing exactly the devices of tenant 106-1 may be automatically generated and updated.

In the device group access constraints 240, the application 110 may be defined as including information about who is executing said application, like for example a given tenant. As a consequence, the same software code when executed by different tenants may be considered as two different applications 110 that may have different permissions to access different device according to different group access constraints 240.

Therefore, the present disclosure discloses automatically generating a plurality of device groups, wherein each device group includes one or more devices of the smart building and is defined to include all devices of the smart building that satisfy one or more properties and providing one or more device group access constraints 240 for a monitoring and/or controlling application.

FIG. 2B shows only one group of devices, but more generally an application may receive one or more permissions for accessing one or more device groups.

The generated device groups may be automatically updated.

A device group may include a representation of one or more devices in the smart building, for example including pointers/addresses to the devices in the smart building that allow an identification of the devices in the group. Nevertheless, a device group is defined in terms of properties that do not directly involve the identity of the devices, While the device group includes devices that can be unambiguously identified e.g. via a pointer or address, the device group is defined as containing devices satisfying a given property where said property does not involve a specific identity of the device. For example, the device group access constraint 240 may be formulated by referring to " the group of all devices of tenant 106-1" and the definition of said exemplary group is therefore given in terms of a relationship to tenant 106-1 that does not involve an identity of any particular device. Nevertheless, said group will for example contain or point to the devices for example in room 104-2 and 104-3 allowing an identification of said devices. Said identification may be possible generating the group when iterating over devices in the smart building and including into the group a pointer to/address of exactly those devices (and their identity) that satisfy the group definition, e.g. that belong to tenant 106-1 in the specific example.

Device group access constraints 240 may be specified with a device group access constraint relation 242 that is analogous to the individual device access constraint relation 142, with the difference that the device group access constraint relation 242 specifies a type of permission relating applications to groups of devices, for example specifying according to the example provided in FIG. 2B, if the application 110-1 has a reading and/or writing and/or executing permission with respect to the devices in the group of devices of tenant 106-1.

When a reallocation of rooms to different tenants occurs, the device group access constraints 240 do not need to be updated, since they already capture the intended permission in terms of relevant device groups, abstracting away the specific devices in the groups. The devices in the group(s) may be updated automatically thereby providing a easy to use and robust way to manage permissions.

In order to generate the plurality of device groups, properties of the devices may be automatically determined. For example, for each device in the smart building, the location of the device may be automatically determined using any suitable means. For example, a network of the smart building may be configured to determine a location of any device connected to said network based for example on where the device is plugged in and/or on an access point where the device connects to the network and/or on a signal strength of a wireless local area network signal and/or on any suitable means to detect, track, monitor or verify a location of a device in the smart building.

For example, based on the location of the device and on a recorded room assignment that tracks room reallocations, for example stored in a central memory accessible by the building operating system, it can be determined in real time or before or during the execution of an application, who is the actual user or owner of a given device.

The examples show therefore, that it is possible to automatically determine in real time the location and the tenant owning or using any given device in the smart building.

Other additional device properties may also be determined in real time, like for example, a state of a device, a type of a device. Furthermore, any suitable authentication based for example on a public key infrastructure may be used in order to authenticate devices in the smart building to ensure that malicious external devices may not get access to the network of the smart building.

Based for example on simple properties of the devices in the smart building that are automatically determined, like for example the location of the device, the tenant of the devices that may be determined based on said location looking up an actual room assignment, on optionally even further properties related to a state of a device, it is possible to automatically generate a plurality of device groups.

For example, iterating over the devices in the smart building and reading out the automatically determined location of each device, it is possible to automatically and in real time generate for example a group of devices located on a given floor, or for example the group of devices of a given tenant, looking up all devices located for example in room assigned to a given tenant as automatically recorded in a memory accessed by the building operating system. For example, it is possible to generate the group of devices located in common areas and/or a group of devices of a given type belonging to a given tenant, for example it is possible to generate automatically and in real time the group of all air conditioning devices of tenant 106-1.

Alternatively or in addition, devices 120 may detect a change of location and/or state and may communicate such change for example to the building operating system that generates and/or updates groups of devices according to the communicated changes.

For example, the present disclosure allows generating automatically, and optionally in real time, a plurality of device groups. Each device group may include one or more devices of the smart building and may be defined to include all devices of the smart building that satisfy one or more properties. Generating the device groups automatically and/or in real time is possible for example by iterating over the devices in the smart building and reading out elementary properties of the devices that are automatically determinable, like the location of the device and the tenant of the device. The groups may be generated/constructed in a memory accessed by the building operating system that include devices satisfying one or more properties, for example satisfying atomic properties related to a location of the device that are automatically determinable or more complex properties that may result from atomic properties and the use of logic connectives, like "and", "or", "not", etc.

The present disclosure therefore presents methods and systems that provide the effect that applications 110 can request permissions to access certain kinds of data in a smart building environment, shifting the focus form the device to the data provided by the device when defining the permissions.

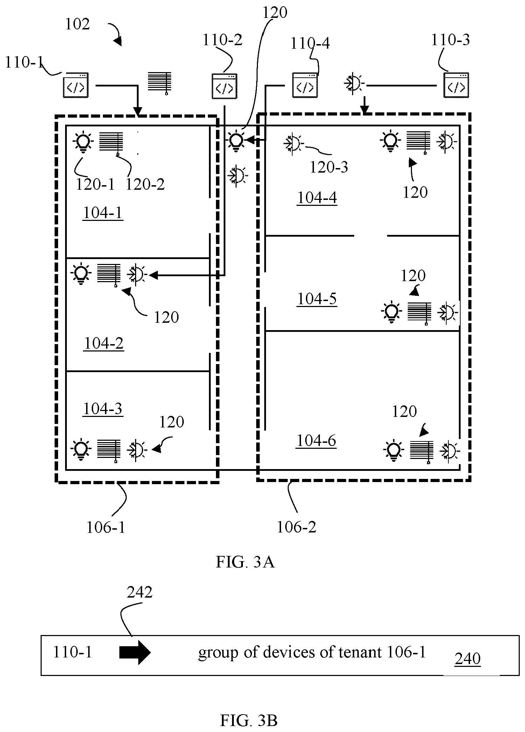

FIG. 3A shows an example of a floor of a smart building according to the present disclosure after a reconfiguration of devices. According to FIG. 3A, tenants 106-1 and 106-2 occupy the same rooms as in FIG. 1A, but now the device 102-3 is moved into a room of tenant 106-2 and is therefore no more a device of tenant 106-1.

Again, when individual device access constraints 140 as in FIG. 1B are not explicitly updated, then the application 110-1 of tenant 106-1 would still access the device 120-3 even when moved into a room of tenant 106-2.

Conversely, with a device group access constraint as FIG. 3B and with device groups that are automatically generated and updated, the permissions remain correct, preventing tenant 106-1 to access the device 102-3 when said device is moved in a room of tenant 106-2.

The provided examples are very simple, and the device groups may be generated in terms of more complex group definitions. For example, a device group may be defined to consists of all devices of the smart building satisfying at least one of the properties: a property stating that the device is in a specified location or area of the smart building (for example, "all devices on the Xth floor" or "all devices in room Y"); a property stating that the device is associated with a specified user or set of users of the smart building, particularly a specified tenant (for example, "all devices of tenants A, B and C"); and a property stating that the device has a specified device type (for example, "all devices that are temperature sensors" or "all devices that are light switches"). A device type may for example specify if the device is a sensor or an actuator, further specifying what quantity is measured and/or controlled. Thereby a type of the device may specify if the device is an air conditioning device or a temperature sensor.

Therefore, access requests can be granted or denied for different kinds of data, as well as based on the properties of the building itself.

According to the present disclosure, it may be the case that application permissions are not defined in terms of specific data, e.g. explicitly related to specific devices 120, but rather in relation to the building and/or the tenants 106 in the building. For example, permissions may be granted for data related to particular spaces in the smart building, particular tenants of the building, or particular kinds of spaces rather than in relation to a particular device.

According to the present disclosure, permissions are easy to define and understand and can be automatically updated when, for example, sensors among the devices 120 are added or removed, or when tenants change.

To prevent smart building applications from accessing more information than required, and for monitoring and restricting the access such applications have to smart building data and functionality, an access control mechanism may be provided.

According to the present disclosure, to avoid problems associated with churn, stale permissions, and complex permission assignments, permissions are at least in part not defined in terms of the actual resources available in the smart building, i.e. devices 120 and/or sensors among the devices.

The present disclosure proposes a permission model for smart building applications that builds on the information model of the building, as an additional layer of abstraction that is already in use by the building operating system (BOS). In this model, applications can for example request and be granted access to data based on either the kind of data, or associated properties of the underlying building. For example, an application can request access to all sensors in a particular room, all temperature sensors in rooms with a particular tenant, all lights in shared or common spaces, all window blinds on the second floor, etc. The permissions can be easily visualized as overlays of building visualizations, and are easy to understand and defined for administrators.

A mapping from the abstract permission to actual objects, i.e. devices and sensors among the devices, may be performed on the fly by the BOS when an application accesses the data. The absence of a persistent mapping avoids the risk of stale permission mappings or delayed updates, which can result in applications getting undesired levels of access or failing to function properly.

Building a permission model on an abstraction layer that incorporates tenancy information can also allow tenants to set up their own applications without relying on centralized configuration or permission assignments. Tenants can grant a subset of permissions for their spaces to applications without risk of misconfiguration resulting in access to other tenant data.

Methods according to the present solutions can be implemented in software, as part of a building operating system, which could be deployed locally, or as a hosted service. The implementation can also alternatively or in addition be part of a distributed middleware layer.

Typical usage scenarios include a user setting up an application, or a developer defining the data requirements for their application. In the former case, the user can be someone with full access to the building, or a tenant who may only set up applications for their own spaces. A user with full control selects an application to install, for instance from an application marketplace. The application 110 defines its data requirements in terms of types of data, e.g. temperature of presence data. These are presented to the user during installation, including a visual representation, showing affected spaces, objects, i.e. devices, sensors, as part of a building visualization, e.g. a floorplan. The user can see affected spaces, objects/devices, and tenants, and approve the requested permissions or adjust them, e.g. to further restrict the types of data the application can access, or to limit accesses to certain parts of the building, to spaces associated with certain tenants, etc. Once the user approves the permissions, the application can be installed and deployed. For a tenant, the process is similar, but the permissions the user can grant and the visualization available to them are restricted, at least to their own spaces, with the possibility to define further restrictions, e.g. permissions that may not be delegated to applications.

Application developers may define the data requirements for their application as part of the software bundle that is installed on the system. Data requirements are defined in terms of types of data, and can further include access granularities, e.g. room-level, floor-level, and/or building-level aggregated data. This information is provided to users during installation.

A system for monitoring and restricting the access smart building applications have to sensitive data prevents in particular an oversharing of the data, and visualizes what data is used where, thereby reducing the risk of data breaches.

Permission enforcement is then independently implemented, based on granted permissions, for example by the building operating system.

Permissions could be granted or denied based on the kind of data, e.g. all temperature sensor data, or properties of the building, e.g., all data for the 2^{nd} floor.

The present application therefore in particular provides the following benefits:
- a permission model based on applications, not users;
- permission-based, not role-based permission model;
- grouping of objects of permissions based on information model;
   - E.g. all sensors in rooms belonging to this tenant, all lights in shared spaces, etc

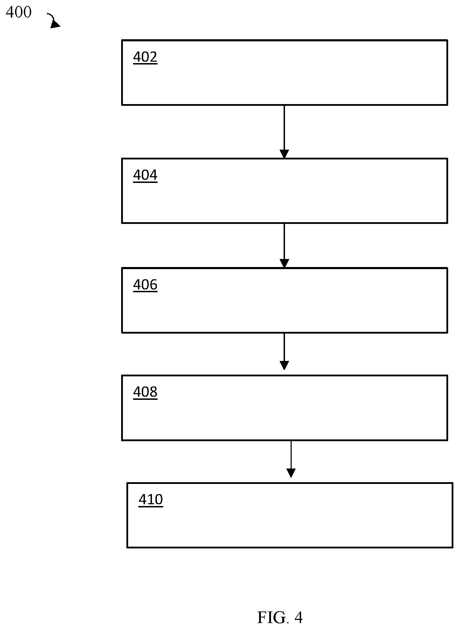

FIG 4 shows a method for monitoring and/or controlling devices of a smart building according to the present disclosure.

The present disclosure provides a method 400, as illustrated in FIG. 4, for monitoring and/or controlling devices of a smart building, the method comprising:
- generating 402 a plurality of device groups, wherein each device group includes one or more devices of the smart building and is defined to include all devices of the smart building that satisfy one or more properties;
- providing 404 one or more device group access constraints 240 for a monitoring and/or controlling application,
   wherein the monitoring and/or controlling application is configured for monitoring and/or controlling at least one device of the smart building,
   wherein each device group access constraint is associated with a device group of the plurality of device groups and specifies a grant or refusal of permission for the monitoring and/or controlling application to access said device group;
      --receiving 406, from the monitoring and/or controlling application, a request to access a first device group of the plurality of device groups;
- granting or refusing 408, by a permission control unit of the smart building, the monitoring and/or controlling application permission to access the first device group based on one or more device group access constraints associated with the first device group; and
- if said access to the first device group is granted, monitoring and/or controlling 410 at least one device of the first device group via an execution of the monitoring and/or controlling application.

The device group access constraints according to the method 400 are for example the device group access constraints 240 as in FIG. 2B and FIG. 3B and the monitoring and controlling application is for example the application 110, 110-1, 110-2, 110-3, 110-4 according to the described examples. The method 400 allows to carry out in particular the subject-matter exemplarily illustrated in FIG. 1A, 1B, 2A, 2B, 3A, 3B.

In some embodiments, at least one of the following holds:
the first device group is generated based on a group definition of the first device group, the group definition not referring to any particular device in the first device group; or
the request to access the first device group is generated based on a group definition of the first device group, the group definition not referring to any particular device in the first device group; or
each device group access constraint associated with a device group is based on a group definition of the device group and does not refer to any particular device in the device group.

In some embodiments, the method further comprises:
after the permission to access the first device group has been granted, determining which devices belong to the first device group; and
permitting the monitoring and/or controlling application to access any of the determined devices of the first device group.

In some embodiments, each device group is defined to consist of all devices of the smart building satisfying at least one or more of the following properties:
- a property stating that the device is in a specified location or area of the smart building;
- a property stating that the device is associated with a specified user or set of users of the smart building, particularly a specified tenant; and
- a property stating that the device has a specified device type.

In some embodiments, historical data of at least one device in at least one device group is stored in a memory or storage of a computer system associated with the smart building forming historical stored data. The memory or storage and the computer system associated with the smart building may be further configured to grant or refuse the monitoring and/or controlling application permission to access the historical stored data of the at least one device in the at least one device group based on one or more device group access constraints associated with the at least one device group, for example device group access constraints at the time when the historical data is generated/collected (e.g. obtained by a sensor) and/or stored in the memory or storage of the computer system associated with the smart building. For example, access to the historical data is subject to the same device group access constraints and/or restrictions/permissions as access to the devices generating the data at the time when the data is generated and/or stored. The memory or storage and the computer system for example ensure that the access constraints and permission that were applicable when the historical data was generated are used to grant or refuse access to the historical stored data.

In some embodiments, the one or more device group access constraints specify at least one permission to access a device group of the plurality of device groups, the permission to access specifying a permission to read and/or write data of devices in the device group.

In some embodiments, the one or more device group access constraints specify alternatively or in addition at least one permission to access a device group of the plurality of device groups, the permission to access specifying a permission to specify or modify a device configuration of devices in the device group. In some embodiments, the permission to specify or modify a device configuration may include for example a permission to specify or modify a sensitivity or sampling rate of a device, for example of a sensor.

In some embodiments, the method further comprises:
- updating the first device group, wherein the first device group after updating includes a device not included in the first device group before updating or the first device group before updating includes a device not included in the first device group after updating,
wherein the one or more device group access constraints associated with the first device group are unaffected by the updating.

In some embodiments, one or more devices in the plurality of device groups are visualized on a visualization system and the one or more access constraints are provided based on the visualized devices.

In some embodiments, a device group access constraint specifies that the monitoring and/or controlling application has a permission to access a particular device group, and wherein the method further comprises:
generating a further device group consisting of one or more of the devices of the particular device group and providing further access constraints specifying whether or not the monitoring and/or controlling application has a permission to access devices in the further device group when executed by a designated user.

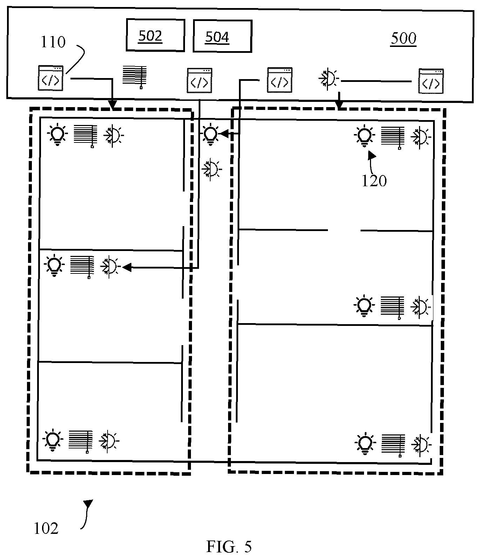

FIG. 5 shows a system 500 for monitoring and/or controlling devices of a smart building. The system 500 may communicate with one or more floors 102 of a smart building and/or with devices 120 of the smart building, located at any floor, for example via any suitable network like for example a local are network and/or a wireless local area network.

The system 500 carries out the methods of the present disclosure, in particular the method 400 of FIG. 4. For example, the system 500 may execute an operating system of the smart building configured to implement methods according to the present disclosure, like the method 400.

The present disclosure further provides a system 500 for monitoring and/or controlling devices of a smart building, the system being configured to:
- generate a plurality of device groups, wherein each device group includes one or more devices of the smart building and is defined to include all devices of the smart building that satisfy one or more properties;
- store, in a storing unit 502 of the system, one or more device group access constraints for a monitoring and/or controlling application,
   wherein the monitoring and/or controlling application is configured for monitoring and/or controlling at least one device of the smart building,
   wherein each device group access constraint is associated with a device group of the plurality of device groups and specifies a grant or refusal of permission for the monitoring and/or controlling application to access said device group;
- receive, from the monitoring and/or controlling application, a request to access a first device group of the plurality of device groups;
- grant or refuse, by a permission control unit 504 of the system, the monitoring and/or controlling application permission to access the first device group based on one or more device group access constraints associated with the first device group; and
- if said access to the first device group is granted, monitor and/or control at least one device of the first device group via an execution of the monitoring and/or controlling application.

The system may be configured to perform the method described herein, in particular for example to carry out the method 400 as in FIG. 4.

For example, the storing unit 502 may store additional information used to generate device groups and/or to update already generated device groups efficiently. For example, the storing unit 502 and/or a memory of the system 500 may include a mapping describing the room occupation by various tenants. If rooms are reassigned, said mapping for example in the storing unit may be automatically updated, for example via a synchronization with a computing system used to record room assignments.

The permission control unit may be any system, subsystem or part of the system 500, including an implementation with specific software, configured to enable or disable an execution of the monitoring and/or controlling application in function of one or more device group access constraints.

The system 500 and/or the storing unit 502 and/or the permission control unit may be implemented with any suitable implementation, for example using hardware and/or software located in the smart building or close to the smart building and/or via a remote access for example to a cloud based implementation and/or accessing remote computers over a network.

In some embodiments, the system is configured to generate the first device group based on a group definition of the first device group, the group definition not referring to any particular device in the first device group; and/or

the request to access the first device group is generated based on a group definition of the first device group, the group definition not referring to any particular device in the first device group; and/or
each device group access constraint associated with a device group is based on a group definition of the device group and does not refer to any particular device in the device group.

In some embodiments, the system is further configured to:
after the permission to access the first device group has been granted, determine which devices belong to the first group;
and permit the monitoring and/or controlling application to access any of the determined devices of the first device group.

In some embodiments, each device group is defined to consist of all devices of the smart building satisfying at least one or more of the following properties:
- a property stating that the device is in a specified location or area of the smart building;
- a property stating that the device is associated with a specified user or set of users of the smart building, particularly a specified tenant; and
- a property stating that the device has a specified device type.

In some embodiments, the system is further configured to:
- update the first device group, wherein the first device group after updating includes a device not included in the first device group before updating or the first device group before updating includes a device not included in the first device group after updating,
and the one or more device group access constraints associated with the first device group are unaffected by the updating.

**In** some embodiments, the system is further configured to visualize devices in the plurality of device groups with a visualization system and to receive and store the one or more access constraints based on the visualized devices.

**In** some embodiments, when an access constraint specifies that a monitoring and/or controlling application has a permission to access devices in a particular group, the system is further configured to generate a further device group consisting of one or more of the devices of the particular group and to further receive and store further access constraints further specifying whether or not the monitoring application has a permission to access devices in the further group when executed by a designated user.

The present disclosure further provides a computer program comprising instructions which, when the program is executed by a computer system of a smart building, cause the computer system of the smart building to carry out the methods of the present disclosure.

## Claims

1. A method (400) for monitoring and/or controlling devices of a smart building, the method comprising:
- generating (402) a plurality of device groups, wherein each device group includes one or more devices of the smart building and is defined to include all devices of the smart building that satisfy one or more properties;
- providing (404) one or more device group access constraints for a monitoring and/or controlling application,
wherein the monitoring and/or controlling application is configured for monitoring and/or controlling at least one device of the smart building,
wherein each device group access constraint is associated with a device group of the plurality of device groups and specifies a grant or refusal of permission for the monitoring and/or controlling application to access said device group;
--receiving (406), from the monitoring and/or controlling application, a request to access a first device group of the plurality of device groups;
- granting or refusing (408), by a permission control unit of the smart building, the monitoring and/or controlling application permission to access the first device group based on one or more device group access constraints associated with the first device group; and
- if said access to the first device group is granted, monitoring and/or controlling (410) at least one device of the first device group via an execution of the monitoring and/or controlling application.

2. The method of claim 1, wherein at least one of the following holds:
the first device group is generated based on a group definition of the first device group, the group definition not referring to any particular device in the first device group; or
the request to access the first device group is generated based on a group definition of the first device group, the group definition not referring to any particular device in the first device group; or
each device group access constraint associated with a device group is based on a group definition of the device group and does not refer to any particular device in the device group.

3. The method of any of claims 1 to 2, further comprising:
after the permission to access the first device group has been granted, determining which devices belong to the first device group; and
permitting the monitoring and/or controlling application to access any of the determined devices of the first device group.

4. The method of any of claims 1 to 3, wherein each device group is defined to consist of all devices of the smart building satisfying at least one or more of the following properties:
- a property stating that the device is in a specified location or area of the smart building;
- a property stating that the device is associated with a specified user or set of users of the smart building, particularly a specified tenant; and
- a property stating that the device has a specified device type.

5. The method of any of claims 1 to 4, further comprising:
- updating the first device group, wherein the first device group after updating includes a device not included in the first device group before updating or the first device group before updating includes a device not included in the first device group after updating,
wherein the one or more device group access constraints associated with the first device group are unaffected by the updating.

6. The method of any of claims 1 to 5, wherein one or more devices in the plurality of device groups are visualized on a visualization system and the one or more access constraints are provided based on the visualized devices.

7. The method of any of claims 1 to 6, wherein an access constraint specifies that the monitoring and/or controlling application has a permission to access a particular device group, and wherein the method further comprises:
generating a further device group consisting of one or more of the devices of the particular device group and providing further access constraints specifying whether or not the monitoring and/or controlling application has a permission to access devices in the further device group when executed by a designated user.

8. A system (500) for monitoring and/or controlling devices of a smart building, the system being configured to:
- generate a plurality of device groups, wherein each device group includes one or more devices of the smart building and is defined to include all devices of the smart building that satisfy one or more properties;
- store, in a storing unit of the system, one or more device group access constraints for a monitoring and/or controlling application,
wherein the monitoring and/or controlling application is configured for monitoring and/or controlling at least one device of the smart building,
wherein each device group access constraint is associated with a device group of the plurality of device groups and specifies a grant or refusal of permission for the monitoring and/or controlling application to access said device group;
- receive, from the monitoring and/or controlling application, a request to access a first device group of the plurality of device groups;
- grant or refuse, by a permission control unit of the system, the monitoring and/or controlling application permission to access the first device group based on one or more device group access constraints associated with the first device group; and
- if said access to the first device group is granted, monitor and/or control at least one device of the first device group via an execution of the monitoring and/or controlling application.

9. The system of claim 8, wherein the system is configured to generate the first device group based on a group definition of the first device group, the group definition not referring to any particular device in the first device group; or
the request to access the first device group is generated based on a group definition of the first device group, the group definition not referring to any particular device in the first device group; or
each device group access constraint associated with a device group is based on a group definition of the device group and does not refer to any particular device in the device group.

10. The system of any of claims 8 to 9, the system being further configured to:
after the permission to access the first device group has been granted, determine which devices belong to the first group;
and permit the monitoring and/or controlling application to access any of the determined devices of the first device group.

11. The system of any of claims 8 to 10, wherein each device group is defined to consist of all devices of the smart building satisfying at least one or more of the following properties:
- a property stating that the device is in a specified location or area of the smart building;
- a property stating that the device is associated with a specified user or set of users of the smart building, particularly a specified tenant; and
- a property stating that the device has a specified device type.

12. The system of any of claims 8 to 11 being further configured to:
- update the first device group, wherein the first device group after updating includes a device not included in the first device group before updating or the first device group before updating includes a device not included in the first device group after updating,
and wherein the one or more device group access constraints associated with the first device group are unaffected by the updating.

13. The system of any of claims 8 to 12, being further configured to visualize devices in the plurality of device groups with a visualization system and to receive and store the one or more access constraints based on the visualized devices.

14. The system of any of claims 8 to 13, wherein when an access constraint specifies that a monitoring and/or controlling application has a permission to access devices in a particular group, the system is further configured to generate a further device group consisting of one or more of the devices of the particular group and to further receive and store further access constraints further specifying whether or not the monitoring application has a permission to access devices in the further group when executed by a designated user.

15. A computer program comprising instructions which, when the program is executed by a computer system of a smart building, cause the computer system of the smart building to carry out the method of any of claims 1 to 7.

## Patentansprüche

1. Verfahren (400) zum Überwachen und/oder Steuern von Geräten eines intelligenten Gebäudes, wobei das Verfahren Folgendes umfasst:
- Erzeugen (402) einer Vielzahl von Gerätegruppen, wobei jede Gerätegruppe ein oder mehrere Geräte des intelligenten Gebäudes umfasst und so definiert ist, dass sie alle Geräte des intelligenten Gebäudes umfasst, die eine oder mehrere Eigenschaften erfüllen;
- Bereitstellen (404) einer oder mehrerer Gerätegruppenzugriffsbeschränkungen für eine Überwachungs- und/oder Steuerungsanwendung,
wobei die Überwachungs- und/oder Steuerungsanwendung zum Überwachen und/oder Steuern mindestens eines Geräts des intelligenten Gebäudes konfiguriert ist,
wobei jede Gerätegruppenzugriffsbeschränkung einer Gerätegruppe der Vielzahl von Gerätegruppen zugeordnet ist und eine Erteilung oder Ablehnung einer Berechtigung für die Überwachungs- und/oder Steuerungsanwendung zum Zugreifen auf die Gerätegruppe festlegt;
- Empfangen (406), von der Überwachungs- und/oder Steuerungsanwendung, einer Anforderung zum Zugreifen auf eine erste Gerätegruppe der Vielzahl von Gerätegruppen;
- Erteilen oder Ablehnen (408), durch eine Berechtigungssteuereinheit des intelligenten Gebäudes, einer Berechtigung für die Überwachungs- und/oder Steuerungsanwendung zum Zugreifen auf die erste Gerätegruppe basierend auf einer oder mehreren der ersten Gerätegruppe zugeordneten Gerätegruppenzugriffsbeschränkungen; und,
- wenn der Zugriff auf die erste Gerätegruppe erteilt wird, Überwachen und/oder Steuern (410) mindestens eines Geräts der ersten Gerätegruppe über eine Ausführung der Überwachungs- und/oder Steuerungsanwendung.

2. Verfahren nach Anspruch 1, wobei mindestens eines von Folgendem gilt:
die erste Gerätegruppe wird basierend auf einer Gruppendefinition der ersten Gerätegruppe erzeugt, wobei sich die Gruppendefinition nicht auf ein einzelnes Gerät in der ersten Gerätegruppe bezieht; oder
die Anforderung zum Zugreifen auf die erste Gerätegruppe wird basierend auf einer Gruppendefinition der ersten Gerätegruppe erzeugt, wobei sich die Gruppendefinition nicht auf ein einzelnes Gerät in der ersten Gerätegruppe bezieht; oder
jede einer Gerätegruppe zugeordnete Gerätegruppenzugriffsbeschränkung basiert auf einer Gruppendefinition der Gerätegruppe und bezieht sich nicht auf ein einzelnes Gerät in der Gerätegruppe.

3. Verfahren nach einem der Ansprüche 1 bis 2, das ferner Folgendes umfasst:
nachdem die Berechtigung zum Zugreifen auf die erste Gerätegruppe erteilt worden ist, Bestimmen, welche Geräte zu der ersten Gerätegruppe gehören; und
Berechtigen der Überwachungs- und/oder Steuerungsanwendung zum Zugreifen auf ein beliebiges der bestimmten Geräte der ersten Gerätegruppe.

4. Verfahren nach einem der Ansprüche 1 bis 3, wobei jede Gerätegruppe so definiert ist, dass sie aus allen Geräten des intelligenten Gebäudes besteht, die mindestens eine oder mehrere der folgenden Eigenschaften erfüllen:
- eine Eigenschaft, wonach sich das Gerät an einem festgelegten Ort oder in einem festgelegten Bereich des intelligenten Gebäudes befindet;
- eine Eigenschaft, wonach das Gerät einem festgelegten Benutzer oder einer festgelegten Menge von Benutzern des intelligenten Gebäudes, insbesondere einem festgelegten Mieter, zugeordnet ist; und
- eine Eigenschaft, wonach das Gerät einen festgelegten Gerätetyp aufweist.

5. Verfahren nach einem der Ansprüche 1 bis 4, das ferner Folgendes umfasst:
- Aktualisieren der ersten Gerätegruppe, wobei die erste Gerätegruppe nach dem Aktualisieren ein in der ersten Gerätegruppe vor dem Aktualisieren nicht enthaltenes Gerät enthält oder die erste Gerätegruppe vor dem Aktualisieren ein in der ersten Gerätegruppe nach dem Aktualisieren nicht enthaltenes Gerät enthält,
wobei die eine oder die mehreren der ersten Gerätegruppe zugeordneten Gerätegruppenzugriffsbeschränkungen von dem Aktualisieren nicht beeinflusst werden.

6. Verfahren nach einem der Ansprüche 1 bis 5, wobei ein oder mehrere Geräte in der Vielzahl von Gerätegruppen auf einem Visualisierungssystem visualisiert werden und die eine oder die mehreren Zugriffsbeschränkungen basierend auf den visualisierten Geräten bereitgestellt werden.

7. Verfahren nach einem der Ansprüche 1 bis 6, wobei eine Zugriffsbeschränkung festlegt, dass die Überwachungs- und/oder Steuerungsanwendung eine Berechtigung zum Zugreifen auf eine einzelne Gerätegruppe hat, und wobei das Verfahren ferner Folgendes umfasst: Erzeugen einer weiteren Gerätegruppe, die aus einem oder mehreren der Geräte der einzelnen Gerätegruppe besteht, und Bereitstellen weiterer Zugriffsbeschränkungen, die festlegen, ob die Überwachungs- und/oder Steuerungsanwendung eine Berechtigung zum Zugreifen auf Geräte in der weiteren Gerätegruppe hat oder nicht, wenn sie von einem benannten Benutzer ausgeführt wird.

8. System (500) zum Überwachen und/oder Steuern von Geräten eines intelligenten Gebäudes, wobei das System zu Folgendem konfiguriert ist:
- Erzeugen einer Vielzahl von Gerätegruppen, wobei jede Gerätegruppe ein oder mehrere Geräte des intelligenten Gebäudes umfasst und so definiert ist, dass sie alle Geräte des intelligenten Gebäudes umfasst, die eine oder mehrere Eigenschaften erfüllen;
- Speichern, in einer Speichereinheit des Systems, einer oder mehrerer Gerätegruppenzugriffsbeschränkungen für eine Überwachungs- und/oder Steuerungsanwendung,
wobei die Überwachungs- und/oder Steuerungsanwendung zum Überwachen und/oder Steuern mindestens eines Geräts des intelligenten Gebäudes konfiguriert ist,
wobei jede Gerätegruppenzugriffsbeschränkung einer Gerätegruppe der Vielzahl von Gerätegruppen zugeordnet ist und eine Erteilung oder Ablehnung einer Berechtigung für die Überwachungs- und/oder Steuerungsanwendung zum Zugreifen auf die Gerätegruppe festlegt;
- Empfangen, von der Überwachungs- und/oder Steuerungsanwendung, einer Anforderung zum Zugreifen auf eine erste Gerätegruppe der Vielzahl von Gerätegruppen;
- Erteilen oder Ablehnen, durch eine Berechtigungssteuereinheit des Systems, einer Berechtigung für die Überwachungs- und/oder Steuerungsanwendung zum Zugreifen auf die erste Gerätegruppe basierend auf einer oder mehreren der ersten Gerätegruppe zugeordneten Gerätegruppenzugriffsbeschränkungen; und,
- wenn der Zugriff auf die erste Gerätegruppe erteilt wird, Überwachen und/oder Steuern mindestens eines Geräts der ersten Gerätegruppe über eine Ausführung der Überwachungs- und/oder Steuerungsanwendung.

9. System nach Anspruch 8, wobei das System dazu konfiguriert ist, die erste Gerätegruppe basierend auf einer Gruppendefinition der ersten Gerätegruppe zu erzeugen, wobei sich die Gruppendefinition nicht auf ein einzelnes Gerät in der ersten Gerätegruppe bezieht; oder die Anforderung zum Zugreifen auf die erste Gerätegruppe basierend auf einer Gruppendefinition der ersten Gerätegruppe erzeugt wird, wobei sich die Gruppendefinition nicht auf ein einzelnes Gerät in der ersten Gerätegruppe bezieht; oder
jede einer Gerätegruppe zugeordnete Gerätegruppenzugriffsbeschränkung auf einer Gruppendefinition der Gerätegruppe basiert und sich nicht auf ein einzelnes Gerät in der Gerätegruppe bezieht.

10. System nach einem der Ansprüche 8 bis 9, wobei das System ferner zu Folgendem konfiguriert ist:
nachdem die Berechtigung zum Zugreifen auf die erste Gerätegruppe erteilt worden ist, Bestimmen, welche Geräte zu der ersten Gruppe gehören;
und Berechtigen der Überwachungs- und/oder Steuerungsanwendung zum Zugreifen auf ein beliebiges der bestimmten Geräte der ersten Gerätegruppe.

11. System nach einem der Ansprüche 8 bis 10, wobei jede Gerätegruppe so definiert ist, dass sie aus allen Geräten des intelligenten Gebäudes besteht, die mindestens eine oder mehrere der folgenden Eigenschaften erfüllen:
- eine Eigenschaft, wonach sich das Gerät an einem festgelegten Ort oder in einem festgelegten Bereich des intelligenten Gebäudes befindet;
- eine Eigenschaft, wonach das Gerät einem festgelegten Benutzer oder einer festgelegten Menge von Benutzern des intelligenten Gebäudes, insbesondere einem festgelegten Mieter, zugeordnet ist; und
- eine Eigenschaft, wonach das Gerät einen festgelegten Gerätetyp aufweist.

12. System nach einem der Ansprüche 8 bis 11, das ferner zu Folgendem konfiguriert ist:
- Aktualisieren der ersten Gerätegruppe, wobei die erste Gerätegruppe nach dem Aktualisieren ein in der ersten Gerätegruppe vor dem Aktualisieren nicht enthaltenes Gerät enthält oder die erste Gerätegruppe vor dem Aktualisieren ein in der ersten Gerätegruppe nach dem Aktualisieren nicht enthaltenes Gerät enthält,
und wobei die eine oder die mehreren der ersten Gerätegruppe zugeordneten Gerätegruppenzugriffsbeschränkungen von dem Aktualisieren nicht beeinflusst werden.

13. System nach einem der Ansprüche 8 bis 12, das ferner dazu konfiguriert ist, Geräte in der Vielzahl von Gerätegruppen mit einem Visualisierungssystem zu visualisieren und die eine oder die mehreren Zugriffsbeschränkungen basierend auf den visualisierten Geräten zu empfangen und zu speichern.

14. System nach einem der Ansprüche 8 bis 13, wobei, wenn eine Zugriffsbeschränkung festlegt, dass eine Überwachungs- und/oder Steuerungsanwendung eine Berechtigung zum Zugreifen auf Geräte in einer einzelnen Gruppe hat, das System ferner dazu konfiguriert ist, eine weitere Gerätegruppe zu erzeugen, die aus einem oder mehreren der Geräte der einzelnen Gruppe besteht, und ferner weitere Zugriffsbeschränkungen zu empfangen und zu speichern, die ferner festlegen, ob die Überwachungsanwendung eine Berechtigung zum Zugreifen auf Geräte in der weiteren Gruppe hat oder nicht, wenn sie von einem benannten Benutzer ausgeführt wird.

15. Computerprogramm, das Anweisungen umfasst, die, wenn das Programm durch ein Computersystem eines intelligenten Gebäudes ausgeführt wird, bewirken, dass das Computersystem des intelligenten Gebäudes das Verfahren nach einem der Ansprüche 1 bis 7 ausführt.

## Revendications

1. Procédé (400) de surveillance et/ou de commande de dispositifs d'un bâtiment intelligent, le procédé comprenant :
- génération (402) d'une pluralité de groupes de dispositifs, chaque groupe de dispositifs incluant un ou plusieurs dispositifs du bâtiment intelligent et étant défini pour inclure tous les dispositifs du bâtiment intelligent qui satisfont une ou plusieurs propriétés ;
- fourniture (404) d'une ou plusieurs contraintes d'accès d'un groupe de dispositifs pour une application de surveillance et/ou de contrôle,
dans lequel l'application de surveillance et/ou de contrôle est configurée pour surveiller et/ou commander au moins un dispositif du bâtiment intelligent,
dans lequel chaque contrainte d'accès à un groupe de dispositifs est associée à un groupe de dispositifs de la pluralité de groupes de dispositifs et spécifie une autorisation ou un refus d'autorisation pour l'application de surveillance et/ou de commande d'accéder audit groupe de dispositifs ;
- réception (406), en provenance de l'application de contrôle et/ou de contrôle, d'une demande d'accès à un premier groupe de dispositifs de la pluralité de groupes de dispositifs ;
- Octroi ou refus (408), par une unité de contrôle de droits du bâtiment intelligent, du droit d'application de contrôle et/ou de contrôle d'accéder au premier groupe de dispositifs sur la base d'une ou de plusieurs contraintes d'accès d'un groupe de dispositifs associées au premier groupe de dispositifs ; et
- si ledit accès au premier groupe de dispositifs est accordé, surveiller et/ou contrôler (410) au moins un dispositif du premier groupe de dispositifs via une exécution de l'application de contrôle et/ou de contrôle.

2. Procédé de la revendication 1, comprenant en outre au moins une parmi les étapes suivantes :
le premier groupe de dispositifs est généré sur la base d'une définition de groupe du premier groupe de dispositifs, la définition de groupe ne faisant référence à aucun dispositif particulier du premier groupe de dispositifs ; ou
la demande d'accès au premier groupe de dispositifs est générée sur la base d'une définition de groupe du premier groupe de dispositifs, la définition de groupe ne faisant référence à aucun dispositif particulier du premier groupe de dispositifs ; ou
chaque contrainte d'accès de groupe de périphériques associée à un groupe de périphériques est basée sur une définition de groupe du groupe de périphériques et ne fait référence à aucun périphérique particulier du groupe de périphériques.

3. Procédé selon l'une quelconque des revendications 1 à 2, comprenant en outre :
une fois que l'autorisation d'accéder au premier groupe de périphériques a été accordée, déterminer quels périphériques appartiennent au premier groupe de périphériques ; et
permettre à l'application de surveillance et/ou de commande d'accéder à l'un quelconque des dispositifs déterminés du premier groupe de dispositifs.

4. Procédé selon l'une quelconque des revendications 1 à 3, dans lequel chaque groupe de dispositifs est défini comme étant constitué de tous les dispositifs du bâtiment intelligent satisfaisant au moins une ou plusieurs des propriétés suivantes :
- une propriété indiquant que l'appareil se trouve à un emplacement ou une zone spécifié du bâtiment intelligent;
- une propriété indiquant que l'appareil est associé à un utilisateur ou à un ensemble d'utilisateurs spécifiés du bâtiment intelligent, en particulier à un locataire spécifié ; et
- propriété indiquant que le périphérique a un type de périphérique spécifié.

5. Procédé selon l'une quelconque des revendications 1 à 4, comprenant en outre :
- la mise à jour du premier groupe de dispositifs, dans lequel le premier groupe de dispositifs après mise à jour comporte un dispositif non compris dans le premier groupe de dispositifs avant la mise à jour ou le premier groupe de dispositifs avant la mise à jour comporte un dispositif non compris dans le premier groupe de dispositifs après la mise à jour,
dans lequel la ou les contraintes d'accès de groupe de périphériques associées au premier groupe de périphériques ne sont pas affectées par la mise à jour.

6. Procédé selon l'une quelconque des revendications 1 à 5, dans lequel un ou plusieurs dispositifs dans la pluralité de groupes de dispositifs sont visualisés sur un système de visualisation et la ou les contraintes d'accès sont fournies sur la base des dispositifs visualisés.

7. Procédé selon l'une quelconque des revendications 1 à 6, dans lequel une contrainte d'accès spécifie que l'application de surveillance et/ou de contrôle a une permission pour accéder à un groupe de dispositifs particulier, et dans lequel le procédé comprend en outre :
génération d'un autre groupe de dispositifs constitué d'un ou de plusieurs des dispositifs du groupe de dispositifs particulier et fourniture d'autres contraintes d'accès spécifiant si l'application de surveillance et/ou de commande a ou non une autorisation d'accéder à des dispositifs du groupe de dispositifs supplémentaire lorsqu'elle est exécutée par un utilisateur désigné.

8. Système (500) de surveillance et/ou de commande de dispositifs d'un bâtiment intelligent, le système étant configuré pour :
- générer une pluralité de groupes de dispositifs, dans lequel chaque groupe de dispositifs inclut un ou plusieurs dispositifs du bâtiment intelligent et est défini pour inclure tous les dispositifs du bâtiment intelligent qui satisfont une ou plusieurs propriétés ;
- stocker dans une unité de stockage du système, une ou plusieurs contraintes d'accès d'un groupe de dispositifs pour une application de contrôle et/ou de contrôle,
dans lequel l'application de surveillance et/ou de contrôle est configurée pour surveiller et/ou commander au moins un dispositif du bâtiment intelligent,
dans lequel chaque contrainte d'accès à un groupe de dispositifs est associée à un groupe de dispositifs de la pluralité de groupes de dispositifs et spécifie une autorisation ou un refus d'autorisation pour l'application de surveillance et/ou de commande d'accéder audit groupe de dispositifs ;
- recevoir, en provenance de l'application de contrôle et/ou de contrôle, une demande d'accès à un premier groupe de dispositifs de la pluralité de groupes de dispositifs ;
- accorder ou refuser, par une unité de contrôle de permission du système, le droit d'application de contrôle et/ou de contrôle d'accéder au premier groupe de dispositifs sur la base d'une ou de plusieurs contraintes d'accès de groupe de dispositifs associées au premier groupe de dispositifs ; et
- si ledit accès au premier groupe de dispositifs est accordé, surveiller et/ou contrôler au moins un dispositif du premier groupe de dispositifs via une exécution de l'application de surveillance et/ou de contrôle.

9. Système selon la revendication 8, dans lequel le système est configuré pour générer le premier groupe de dispositifs sur la base d'une définition de groupe du premier groupe de dispositifs, la définition de groupe ne faisant référence à aucun dispositif particulier dans le premier groupe de dispositifs ; ou
la demande d'accès au premier groupe de dispositifs est générée sur la base d'une définition de groupe du premier groupe de dispositifs, la définition de groupe ne faisant référence à aucun dispositif particulier du premier groupe de dispositifs ; ou
chaque contrainte d'accès de groupe de périphériques associée à un groupe de périphériques est basée sur une définition de groupe du groupe de périphériques et ne fait référence à aucun périphérique particulier du groupe de périphériques.

10. Le système de l'une quelconque des revendications 8 à 9, le système étant en outre configuré pour :
une fois que l'autorisation d'accéder au premier groupe de périphériques a été accordée, déterminez quels périphériques appartiennent au premier groupe ;
et permettre à l'application de surveillance et/ou de commande d'accéder à l'un quelconque des dispositifs déterminés du premier groupe de dispositifs.

11. Système de l'une quelconque des revendications 8 à 10, dans lequel chaque groupe de dispositifs est défini comme étant constitué de tous les dispositifs du bâtiment intelligent satisfaisant au moins une ou plusieurs des propriétés suivantes :
- une propriété indiquant que l'appareil se trouve à un emplacement ou une zone spécifié du bâtiment intelligent;
- une propriété indiquant que l'appareil est associé à un utilisateur ou à un ensemble d'utilisateurs spécifiés du bâtiment intelligent, en particulier à un locataire spécifié ; et
- propriété indiquant que le périphérique a un type de périphérique spécifié.

12. Le système de l'une quelconque des revendications 8 à 11 étant configuré en outre pour :
- mise à jour du premier groupe de dispositifs, dans lequel le premier groupe de dispositifs après mise à jour comporte un dispositif non compris dans le premier groupe de dispositifs avant la mise à jour ou le premier groupe de dispositifs avant la mise à jour comporte un dispositif non compris dans le premier groupe de dispositifs après la mise à jour,
et dans lequel la ou les contraintes d'accès de groupe de périphériques associées au premier groupe de périphériques ne sont pas affectées par la mise à jour.

13. Système selon l'une quelconque des revendications 8 à 12, étant en outre configuré pour visualiser des dispositifs dans la pluralité de groupes de dispositifs avec un système de visualisation et pour recevoir et stocker la ou les contraintes d'accès sur la base des dispositifs visualisés.

14. Système selon l'une quelconque des revendications 8 à 13, dans lequel lorsqu'une contrainte d'accès spécifie qu'une application de surveillance et/ou de commande a une permission d'accéder à des dispositifs dans un groupe particulier, le système est en outre configuré pour générer un autre groupe de dispositifs constitué d'un ou plusieurs des dispositifs du groupe particulier et pour recevoir et stocker d'autres contraintes d'accès spécifiant en outre si l'application de surveillance a ou non une autorisation d'accéder à des dispositifs du groupe supplémentaire lorsqu'elle est exécutée par un utilisateur désigné.

15. Programme d'ordinateur comprenant des instructions qui, lorsque le programme est exécuté par un ordinateur, amènent l'ordinateur à mettre en œuvre le procédé selon l'une quelconque des revendications 1 à 7.
